(19) Europäisches Patentamt

European Patent Office

Office européen des brevets

(11) Veröffentlichungsnummer: **0 255 852 B1**

⑫ # .EUROPÄISCHE PATENTSCHRIFT

(45) Veröffentlichungstag der Patentschrift:
13.03.91 Patentblatt 91/11

(21) Anmeldenummer: 87104257.8

(22) Anmeldetag: 23.03.87

(51) Int. Cl.⁵: **B29C 45/17**

---

(54) **Giessformwechseleinrichtung an einer Kunststoff-Spritzgiessmaschine.**

---

(30) Priorität: 05.08.86 DE 3626488

(43) Veröffentlichungstag der Anmeldung:
17.02.88 Patentblatt 88/07

(45) Bekanntmachung des Hinweises auf die
Patenterteilung:
13.03.91 Patentblatt 91/11

(84) Benannte Vertragsstaaten:
AT CH DE FR GB IT LI NL

(56) Entgegenhaltungen:
EP-A- 0 092 685
EP-A- 0 246 398
DE-U- 8 435 785

(56) Entgegenhaltungen:
KUNSTSTOFFBERATER, Band 30, Nr. 6, Juni
1985, Seiten 20-21; München, DE; "Ein zukunftsorientiertes Werkzeugschnellwechselsystem"
ZEITSCHRIFT FÜR WIRTSCHAFTLICHE FER-
TIGUNG, Band 79, 1984, Nr. 3, Sonderdruck;
Seiten 136-137, Carl Hansen Verlag, München,
DE; R. BRULZ: "Rechneranwendung im Lagerbereich"
Automatisieren im Spritzgiessbetrieb, Symposium Mai 86, Vortrag von J. Holzschuh

(73) Patentinhaber: Hehl, Karl
Arthur-Hehl-Strasse 32
W-7298 Lossburg 1 (DE)

(72) Erfinder: Hehl, Karl
Arthur-Hehl-Strasse 32
W-7298 Lossburg 1 (DE)

(74) Vertreter: Mayer, Friedrich, Dr. et al
Patentanwälte Dr. Mayer & Frank Westliche 24
W-7530 Pforzheim (DE)

## Beschreibung

Die Erfindung betrifft ein Verfahren entsprechend dem Oberbegriff des Anspruches 1 und eine Gießformwechseleinrichtung entsprechend dem Oberbegriff des Anspruches 3.

Bei einer bekannten Wechseleinrichtung dieser Art, die zum Wechseln von Spritzgießformen bestimmt ist ("Automatisieren im Spritzbetrieb – Symposium Mai 1986", veranstaltet von der Battenfeld Maschinenfabriken GmbH, Vortrag des Ingenieur Johann Holzschuh ; EP-OS 0 092 685) sind die Spritzgießmaschinen in zwei Linien links und rechts der Führung des Wechseltisches mit der Rückseite zueinander aufgestellt. Im Bedarfsfalle ist der Wechselwagen mit einem Hubwerk versehen. Durch ein zusätzliches Drehwerk an der Trägerplatte für die Gießformstellplätze können beide Maschinenlinien bedient werden.

Bei einer bekannten Wechseleinrichtung zum Auswechseln von Spritzgießformen und Plastifiziereinheiten (EP-PS 0 069 221) übergreift ein Rahmengestell sowohl die Spritzgießmaschine als auch ein neben dieser angeordnetes Magazin für die genanntern Arbeitseinheiten. Auf dem Rahmengestell ist ein quer zur Maschinenachse bewegbarer Brückenkran mit parallel zur Maschinenachse bewegbarer Laufkatze gelagert, welch letztere einen vertikal bewegbaren Tragarm mit Greifvorrichtung aufweist. Beim Wechseln einer Einheit wird diese mit der Greifvorrichtung erfaßt, angehoben und nach einem Quertransport im Magazin abgelegt. Beim Transport der Einheiten von den Spritzgießmaschinen zum Magazin (und umgekehrt) hängen die Einheiten am Tragarm der Laufkatze und überfahren dabei im 'Hochtransport' notwendigerweise auch vom Bedienungspersonal beanspruchte Begehungsbereiche an den Spritzgießmaschinen.

Bekannt ist auch ein am Gießformdepot befestigter Wechseltisch mit zwei Stellplätzen, die je mit einer hydraulisch antreibbaren Gießform-Verschiebevorrichtung ausgerüstet sind. Dieser Wechseltisch dient dem Wechsel von Spritzgießformen, die auf dem Drehtisch einer Spritzgießanlage kreisformig angeordnet sind und bei Drehung des Drehtisches aufeinanderfolgend in eine Vertikalpresse einführbar sind, in welcher sie nach Festspannen mit Hilfe einer Spritzgießeinheit gefüllt werden können. Dabei sind Drehtisch, Wechseltisch und Gießformdepot derart nebeneinander angeordnet, daß die bloße Drehung des Wechseltisches und eine Betätigung seiner Gießformverschiebevorrichtung für den Transport der Spritzgießform vom jeweiligen Stellplatz des Drehtisches auf einen Depotstellplatz ausreichend ist. Dank einer vertikalen Verfahrbarkeit des Wechseltisches können übereinander liegende Depotstellplätze beschickt werden (DE-OS 1 629 746). Ferner ist es bekannt, die Spritzgießform beim Gießformwechsel mittels einer horizontal angeordneten endlosen Transportkette zu verschieben, die Bestandteil einer Gießformverschiebevorrichtung ist (DE-PS 32 42 054). Bekannt ist schließlich auch die Eingabe und Entnahme von aufzubewahrenden Gegenständen an einem als Lager dienenden Schrank, welcher nach dem Paternoster-Prinzip umlaufende Plattformen aufweist (Zeitschrift für wirtschaftliche Fertigung 79. Jahrgang 1984, Heft 3, S. 136, 137). Ausgehend von dem genannten Stand der Technik liegt der Erfindung die Aufgabe zugrunde, eine Wechseleinrichtung der eingangs genannten Art derart weiterzubilden, daß mit dem Wechseltisch sowohl Spritzgießformen als auch Plastifiziereinheiten unter der Voraussetzung einer raumsparenden Zuordnung zum Depot vollautomatisch gewechselt und unter Vermeidung eines hängenden Transportes mit Hilfe desselben Wechseltisches zum Depot überführt werden können. Im folgenden werden die 'Spritzgießformen' und die 'Plastifiziereinheiten' unter dem Oberbegriff 'Arbeitseinheiten' zusammengefaßt. Die genannte Aufgabe wird erfindungsgemäß durch die im Patentanspruch 1 aufgeführten Merkmale gelöst. Bei einer solchen Ausbildung sind zwei wichtige, an sich bekannte Funktionen des Wechseltisches, nämlich die Aufnahme der aus der Spritzgießmaschine kommenden, also der auszuwechselnden Arbeitseinheit und der gleichzeitigen Verfügbarmachung einer vorbereiteten, einzuwechselnden Arbeitseinheit einerseits und die Funktion des Transfers der Arbeitseinheiten von und zum Depot mit relativ geringem technischen Aufwand unter Vermeidung eines hängenden Transportes erreichbar, weil der Wechseltisch gleichermaßen für die Handhabung der Spritzgießformen und der Plastifiziereinheiten nutzbar ist. Dank dieser doppelten Benutzbarkeit können über eine einzige Transportwagen-Führung (45) vom bzw. zum Depot wesentlich mehr Kunststoff-Spritzgießmaschinen betreut werden, ohne daß es zu Engpässen beim Transport der Arbeitseinheiten kommt.

Da die Arbeitseinheiten auf dem Wechseltisch hintereinander angeordnet sind, können Spritzgießmaschinen auf beiden Seiten der linearen Führung auch mit Plastifiziereinheiten großer Länge bedient und dabei auf einem Wechseltisch extrem kurzer Bauart adaptiert und transportiert werden.

Bei einer weiteren Ausgestaltung entsprechend dem Patentanspruch 8 sind die beiden je aus einer endlosen Transportkette mit Antriebsmotor und Umlenkrädern sowie einer Führungsleiste besthenden und als bauliche Einheiten ausgebildeten Gießformverschiebevorrichtungen des Wechseltisches je mit Hilfe eines Hydraulikzylinders aus einer Ruheposition, in welcher sie innerhalb der Grundfläche der Trägerplatte des Wechseltisches liegen, in eine Kupplungsbereitschaftsposition verschiebbar (Bereitschaftsverschiebung), in welcher sie die Grundfläche der Trägerplatte überragen. Dadurch ist sichergestellt, daß nach vollzogener Bereitschaftsverschiebung der Mitnehmer der nunmehr in Kupplungsbereitschaft befindlichen Transportkette in die benachbarte Quernut einer auf den Wechseltisch zu ziehenden Sptritzgießform bzw. Palette seitlich eingesteuert werden kann. Außerdem kann der Abstand der Kupplungsorgane der in den Spritzgießmaschinen bzw. im Depot abgestellten Spritzgießformen bzw. Plastifizeiereinheiten von der Symmetrieebene der Schienenführung des Wechseltisches und damit der entsprechende Abstand der Spritzgießmaschinen bzw. des Depots selbst besonders gering bemessen sein. Auf diese Weise wird der Raumbedarf der Spritzgießmaschinen-Gruppe weiter verringert. Schließlich kann durch die genannte Bereitschaftsverschiebung auch der Startpunkt bei der Verschiebung einer Spritzgießform bzw. einer Plastifiziereinheit vom Wechseltisch in einen Depotstellplatz oder in eine Spritzgießmaschine derart vorverlegt werden, daß es im Depot bzw. in der Spritzgießmaschine in die gewünschte Abstellposition gelangt.

Nachstehend wird die Wechseleinrichtung anhand der Zeichnung beschrieben.

Es zeigen :

Fig. 1 die Wechseleinrichtung in perspektivischer Darstellung,

Fig. 2 einen Ausschnitt aus der Wechseleinrichtung im Bereich der Transportbahn zwischen Formspannraum und Wechseltisch in Draufsicht in vergrösserter Darstellung,

Fig. 3 einen Schnitt nach Linie III-III von Fig. 10 in vergrößerter Darstellung (mit abgestellter Spritzgießform),

Fig. 4 einen Schnitt nach Linie IV-IV von Fig. 2,

Fig. 5, 5a, 5b je einen Ausschnitt aus dem Wechseltisch in Anschlußposition an einem Depotstellplatz,

Fig. 6 eine vergrößerte Spritzgießform der Gießformwechseleinrichtung in perspektivischer Darstellung,

Fig. 7-9 Schematas der Gießformwechseleinrichtung zur Verdeutlichung des Wechselverfahrens für die Spritzgießform,

Fig. 10, 11 je eine der Gießformwechseleinrichtung zugeordnete Spritzgießmaschine in Draufsicht beim Wechsel der Plastifiziereinheit,

Fig. 12 eine perspektivisch dargestellte Palette mit zugehöriger Palettenführung,

Fig. 13 die Spritzgießmaschine gemäß Fig. 11 in Stirnansicht mit einer Spritzgießform auf dem Wechseltisch,

Fig. 14 die Spritzgießmaschine gemäß Fig. 11 in Seitenansicht (ohne Wechseltisch).

Fig. 15 ein im Bereich der Eingabe- bzw. Ausgabeöffnung genommener Ausschnitt aus dem Gießformdepot in schematischer Darstellung mit dem Wechseltisch in Anschlußposition und

Fig. 16-18 Schematas zur Arbeitsweise der Gießformwechseleinrichtung beim Wechselverfahren für die Plastifiziereinheit.

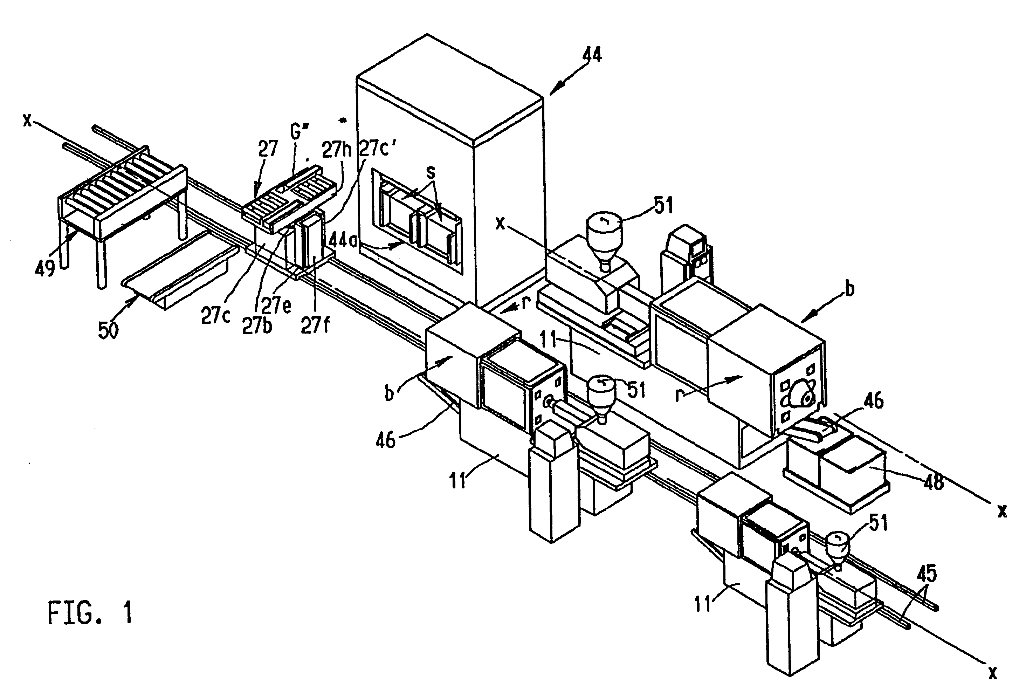

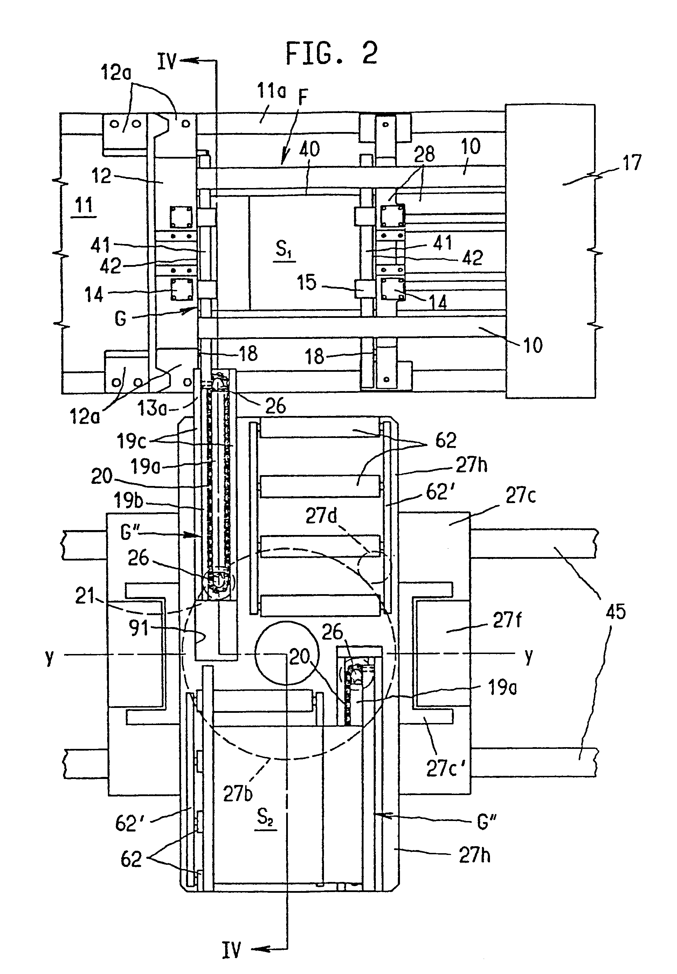

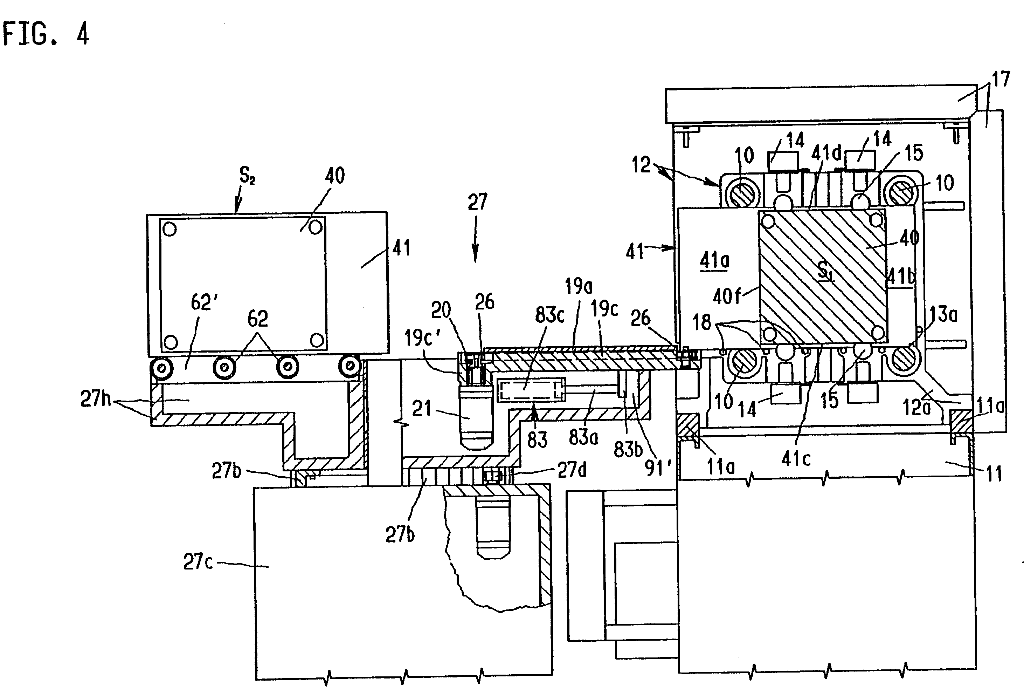

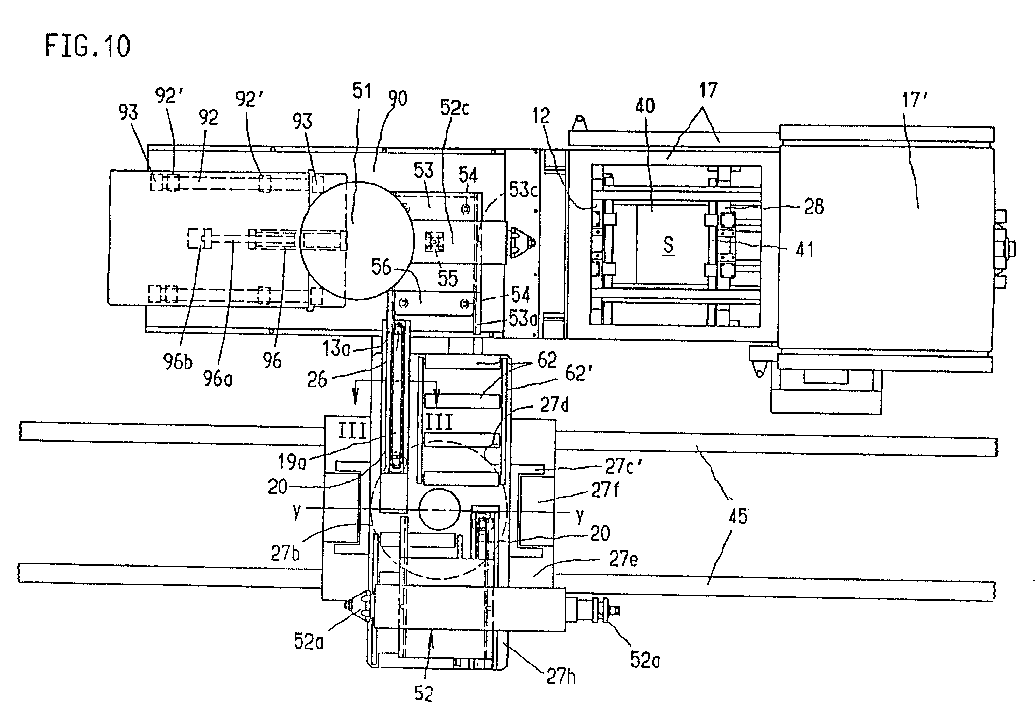

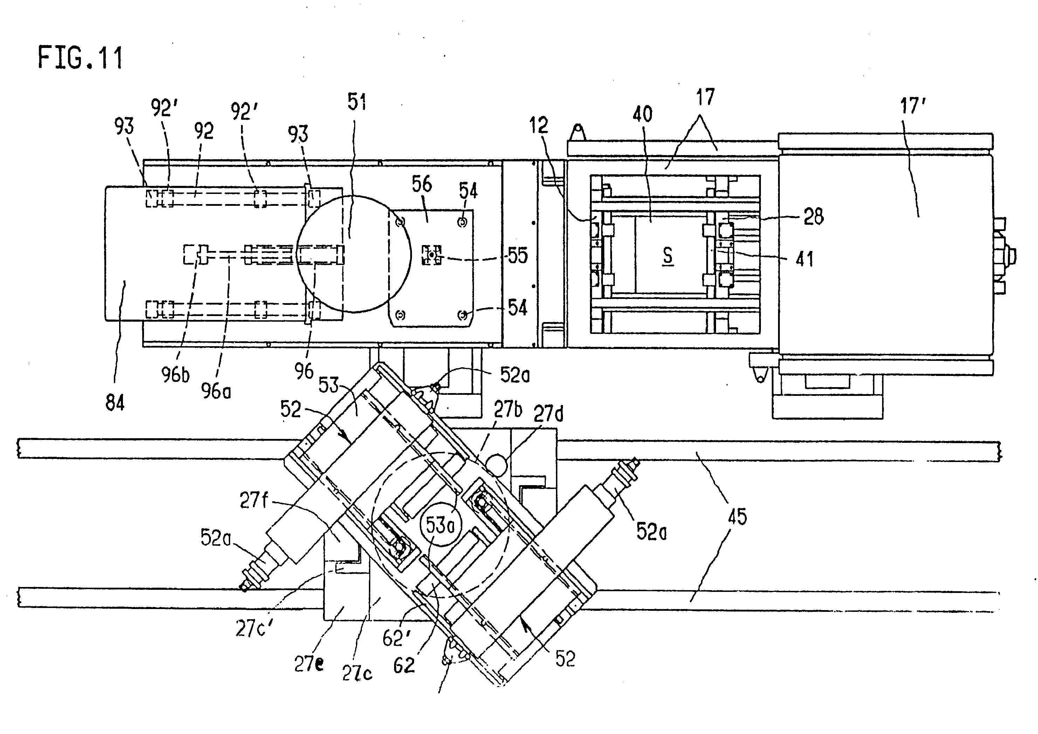

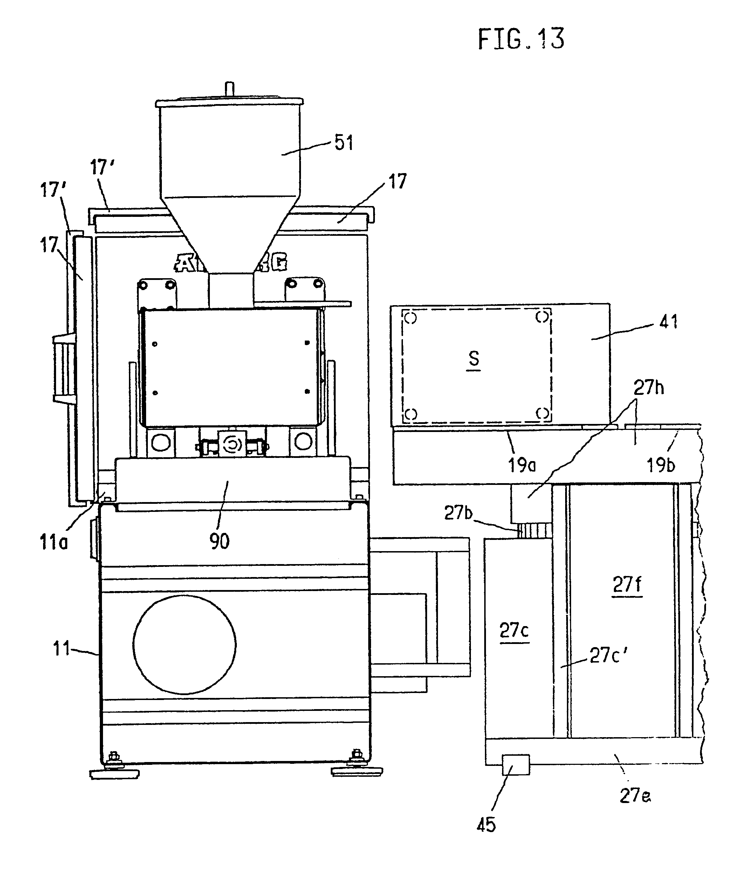

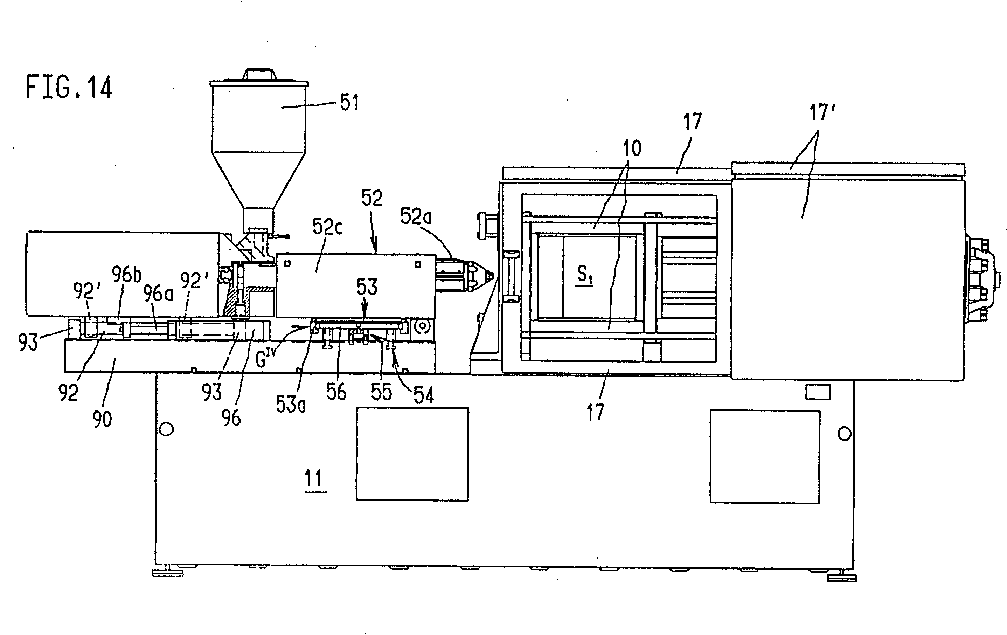

Die Gießformwechseleinrichtung ermöglicht einen computergesteuerten Wechsel der Gießform und gegebenenfalls der Plastifiziereinheit an einer Gruppe von Kunststoff-Spritzgießmaschinen (Spritzgießmaschinen), die einem Gießformdepot raumsparend zugeordnet sind, wobei auch die Transportbewegungen zum und vom Gießformdepot eingeschlossen sind. Das Ausführungsbeispiel der Fig. 1-9 zeigt die Gießformwechseleinrichtung ohne die für den Wechsel der Plastifiziereinheit erforderlichen Mittel. Das durch die übrigen Fign. 10-18 dargestellte Ausführungsbeispiel ist hingegen mit solchen Mitteln ausgerüstet. Aus diesem Grunde kann der für den Gießformwechsel bestimmte Wechseltisch 27 und das Gießformdepot 44 zugleich auch für den Wechsel der Plastifiziereinheit genutzt werden. Die der Gießformwechseleinrichtung zugeordneten Spritzgießmaschinen weisen je einen quaderförmigen Maschinenfuß 11, eine Formschließeinheit und eine horizontale Spritzgießeinheit auf. Die in Einspritzposition, also in Anlage an der Spritzgießform befindliche Spritzgießeinheit ist von der im Formspannraum F der Formschließeinheit einspannbaren Spritzgießform S hydraulisch in eine Absetzposition absetzbar, in welcher die Plastifiziereinheit 52 von der Spritzgießform S thermisch getrennt ist. Die einen Plastifizierzylinder 52a und die Förderschnecke umfassende Plastifiziereinheit 52 ist nach Programm des Computers von der Spritzgießeinheit abkuppelbar. Der bewegbare Formatträger 28 der Formschließeinheit ist an Säulen 10 (Fig. 2) geführt und auf Führungsschienen 11a (Fig. 4, 14) des Maschinenfußes gleitend oder rollend gestützt. Auf den Führungsschienen 11a ist auch der stationäre Formträger 12 über Auflageorgane 12a zentriert. Die Antriebseinrichtung für den bewegbaren Formträger 28 ist durch stationäre Schutzabdeckungen 17', der Formspannraum F durch verschiebbare Schutzabdeckungen 17 abschirmbar (Fig. 4, 10, 11). Die Spritzgießmaschinen sind beidseits entlang der aus zwei Schienen bestehenden linearen Führung 45 des Wechseltisches derart ausgerichtet, daß ihre Rückseiten der Führung 45 sugewandt sind und ihre Spritzachsen x-x parallel zur Führung 45 und, im Falle identischer Spritzgießmaschinen, koaxial zueinander liegen. Wie aus den Fign. 1, 7-9, 16-18 ersichtlich, ist der Führung 45 auch ein als Schrank ausgebildetes Gießformdepot 44 für Spritzgießformen und Plastifiziereinheiten derart zugeordnet, daß seine Frontwand parallel zur Führung 45 liegt. Wie insbesondere aus den Fign. 10 und 14 ersichtlich, ist die Spritzgießeinheit mit Hilfe eines Hydraulikzylinders 96 axial verschiebbar. Sie ist dabei auf Säulen 92 geführt, die über Lagerstücke 93 auf einem Podest 90 des Maschinenfußes 11 befestigt sind. Bei axialer Verschiebung gleiten die die Spritzgießeinheit tragenden Muffen 92′ auf den Säulen 92. Der auf dem Podest 90 befestigte Hydraulikzylinder 96 greift mit seiner Kolbenstange 96a mit Hilfe eines Anschlußstückes 96b an der Spritzgießeinheit an. Die Bedienungsseiten b aller Spritzgießmaschinen sind von der Führung 45 abgewandt (Fig. 1, 9, 28).

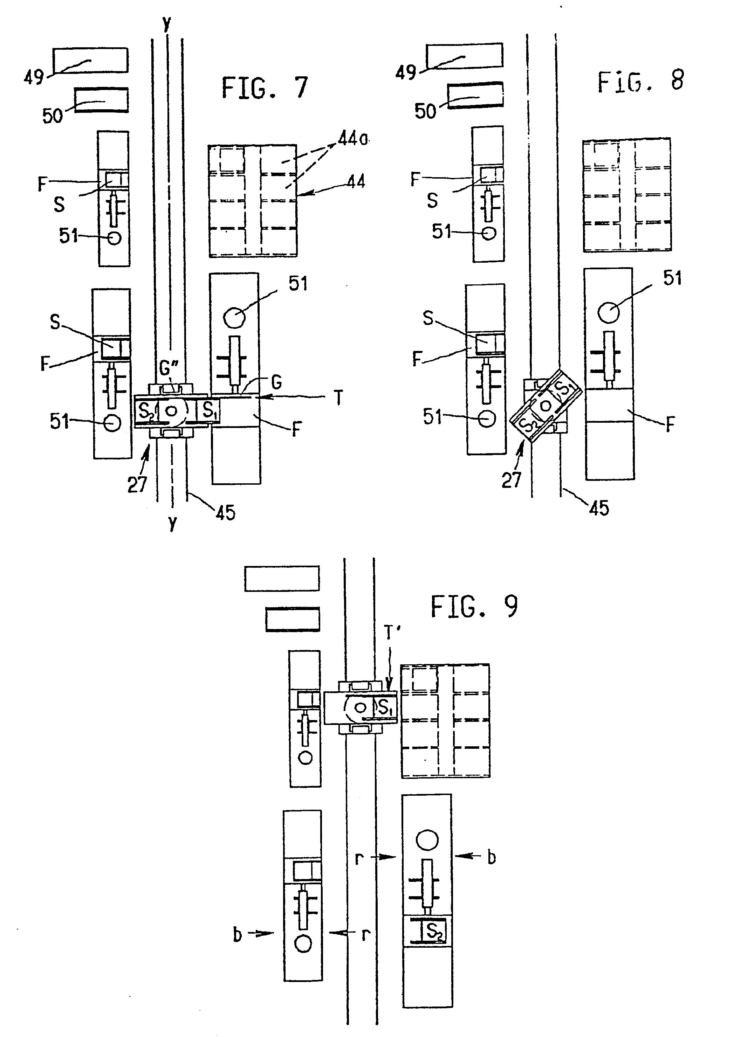

Der Gießformwechseltisch 27 weist zwei Gießformstellplätze auf, die je mit einer Gießformführung G″ und je einer Gießformverschiebevorrichtung versehen sind, die ihrerseits an einem Kupplungsorgan (Quernut 13a) der Spritzgießform S angreift. Der Gießformwechseltisch 27 ist auf seiner Führung 45 wahlweise in eine Anschlußposition am Formspannraum F einer Spritzgießmaschine oder in eine Anschlußposition an einem Gießformstellplatz 44a verfahrbar. Die vertikale Symmetrieebene des Gießformwechseltisches 27 fällt mit der vertikalen Symmetrieebene y-y der Führung 45 zusammen. Auf jeder Symmetriehälfte ist ein Gießformstellplatz derart angeordnet, daß dessen Gießformführung G″ und dessen Gießformverschiebevorrichtung (Transportkette 20) spiegelsymmetrisch zur Symmetrieebene y-y liegt. Infolgedessen ist es möglich, daß die beiden Gießformführungen G″ des Wechseltisches 27 im Gefolge einer Drehung der Trägerplatte 27h des Wechseltisches 27 wechselweise mit der Gießformführung G des Formspannraumes F eine Transportbahn T (Fig. 7) bilden, auf welcher eine Spritzgießform vom Spannraum auf den benachbarten Stellplatz des Wechseltisches 27 und umgekehrt verschoben werden kann. In gleicher Weise können die beiden Gießformstellplätze G″ des in Anschlußposition am Gießformdepot 44 befindlichen Wechseltisches 27 wechselweise im Gefolge einer Drehumg um 180° mit der benachbarten Gießformführung G‴ eines benachbarten Depotstellplatzes eine Transportbahn T′ (Fig. 9) bilden, auf welcher eine Gießform von dem Depotstellplatz 44a auf dem benachbarten Stellplatz des Wechseltisches 27 verfahren werden kann und umgekehrt.

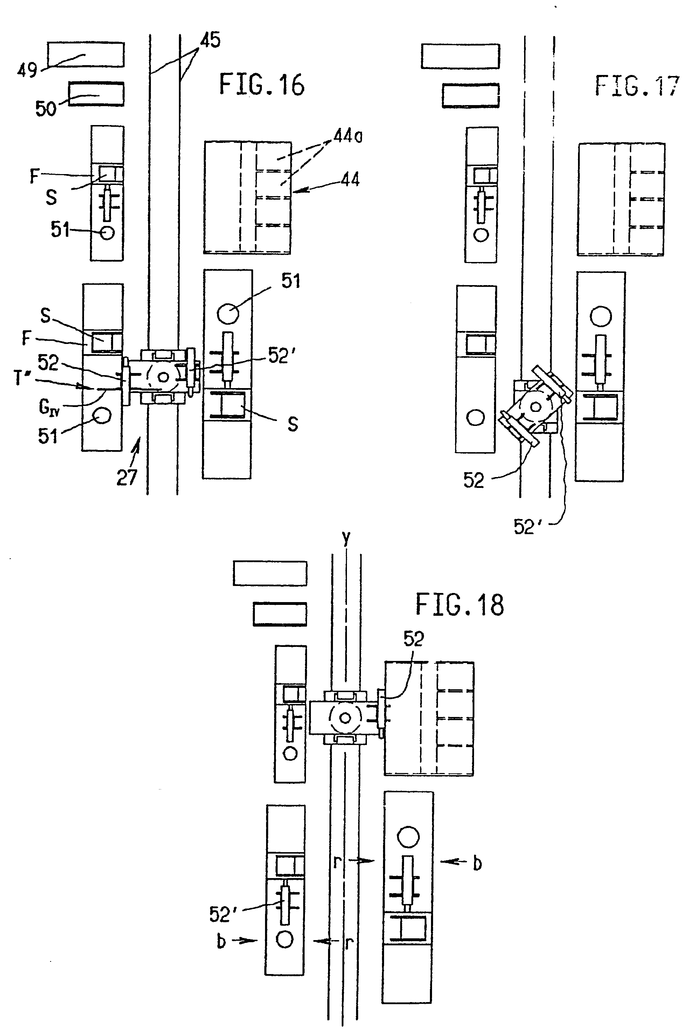

Im Ausführungsbeispiel der Fign. 10-18 ist an den Spritzgießmaschinen je etwa im Schwerpunkt der Plastifiziereinheit 52 eine weitere, der Gießformführung G″ des Wechseltisches 27 entsprechende, quer zur Spritzachse x-x verlaufende Führung (Palettenführung G$^{IV}$) vorgesehen. Demzufolge ist der Wechseltisch 27 in seiner linearen Führung 45 in weitere Anschlußposition verfahrbar, in welchen seine beiden Gießformführungen G″ im Gefolge einer Drehung der Trägerplatte 27h wechselweise mit dieser Führung (Palettenführung G$^{IV}$) und wechselweise mit einer Gießformführung G‴ eines Depotstellplatzes 44a′ weitere Transportbahnen T″ und T′ (Fig. 16, 18) bilden. Auf dieser ist eine eine Plastifiziereinheit 52 tragende Palette 53 verschiebbar, die ein Anlageplattenfragment 53a und ein Kupplungsorgan (Quernut 13a) aufweist, das der Anlageplatte 41 und dem Kupplungsorgan (Quernut 13a) der Spritzgießform S entspricht.

Die wechseltischseitigen Kupplungsorgane (Quernuten 13 a) der in der Formspannräumen F, den Depotstellplätzen 44a bzw. in den Palettenführungen G$^{IV}$ befindlichen Spritzgießformen S bzw. Paletten 53 befinden sich in den zeichnerisch dargestellten Ausführungsbeispielen in gleichem Abstand von der vertikalen Symmetrieebene y-y. Dabei sind die Spritzgießmaschinen beidseits dieser Symmetrieebene y-y angeordnet.

Nun wird der Aufbau des Wechseltisches 27, der Spritzgießform S und des Gießformdepots 44 im einzelnen beschrieben.

Der Wechseltisch 27 ist mittels einer Fußplatte 27e in der durch zwei im Boden verlegte Schienen gebildeten Führung 45 geführt. In der Fußplatte 27e sind zwei symmetrisch zur Symmetrieebene y-y (Fig. 2, 5, 10) der Führung 45 angeordnete vertikale Säulen 27f verankert. An den Säulen 27f ist ein als Gehäuse ausgebildeter, blockartiger Schlitten 27c mittels U-Schienen 27c′ vertikal führbar. Auf dem Schlitten 27c ist eine Trägerplatte 27h von etwa rechteckigem Grundriß mittels einer Drehscheibe 27b um 180° drehbar gelagert.

In der Trägerplatte 27h sind die beiden identischen und spiegelsymmetrisch zur Symmetrieebene y-y angeordneten Gießformführungen G″ und die zugehörigen Gießformverschiebevorrichtungen des Wechseltisches 27 angeordnet, wie insbesondere aus den Fig. 2, 10 erkennbar. Im Schlitten 27c ist der den Wechsel der Spritzgießformen S und der Plastifiziereinheiten 52 steuernde Computer untergebracht. Eine vertikale, rotierbare Antriebswelle eines im Schlitten 27c versenkten Motors kämmt über ein Ritzel 27d mit einem Zahnkranz der Drehscheibe 27b.

Die beiden miteinander identischen Gießformverschiebevorrichtungen des Wechseltisches 27 sind durch zwei endlose, bei vertikaler Drehachse umlaufende Transportketten 20 gebildet. Diese sind wie die Gießformführungen G″ spiegelsymmetrisch zur vertikalen Symmetrieebene y-y in der Trägerplatte 27h angeordnet. Die beiden Gießformführungen G″ des Wechseltisches 27 sind je durch Führungsleisten 19a, 19b gebildet, zwischen welche die eine Anlageplatte 41 der Spritzgießform S zur Führung eintaucht. Das mitnehmende Trumm der Transportkette 20 verläuft an der Unterkante dieser Anlageplatte 41. Ein vertikaler Mitnehmer 20a dieses Trumms ist mit dem Kupplungsorgan dieser Anlageplatte 41 kuppelbar. Die andere Anlageplatte 41 ist auf Stützrollen 62 des betreffenden Gießformstellplatzes abgestützt, die in Lagerleisten 62′ drehbar gelagert sind. Da die Transportkette 20, die Führungsleisten 19a, 19b und die Stützrollen 62 auf der einen Symmetriehälfte des Wechseltisches 27 spiegelsymmetrisch zu den genannten Organen auf der anderen Symmetriehälfte des Wechseltisches 27 angeordnet sind, ist die Transportkette 20 auf dem einen Gießformstellplatz des Wechseltisches 27 and der linken Längskante und am anderen Stellplatz an der rechten Längskante angeordnet (Fig. 2, 10). Die genannte spiegelsymmetrische Anordnung von Transportkette 20, Führungsleisten 19a, 19b und Stützrollen 62 zur Symmetrieebene y-y stellt sicher, daß die genannten Bauteile der hinteren Symmetriehälfte sich nach Drehung der Trägerplatte 27h um 180° in gleichem räumlichen Verhältnis zum benachbarten Formspannraum F oder zum benachbarten Gießformstellplatz 44a befinden wie die genannten Bauteile auf der anderen Symmetriehälfte vor der Drehung. Aus diesem Grunde bilden die beiden Gießformführungen G″ des Wechseltisches 27 in jedem Falle mit der Gießformführung G im benachbarten Formspannraum F bzw. mit der Gießformführung G‴ eines Depotstellplatzes 44 wechselweise eine identische Transportbahn T, wie insbesondere aus den Fign. 2, 7 erkennbar.

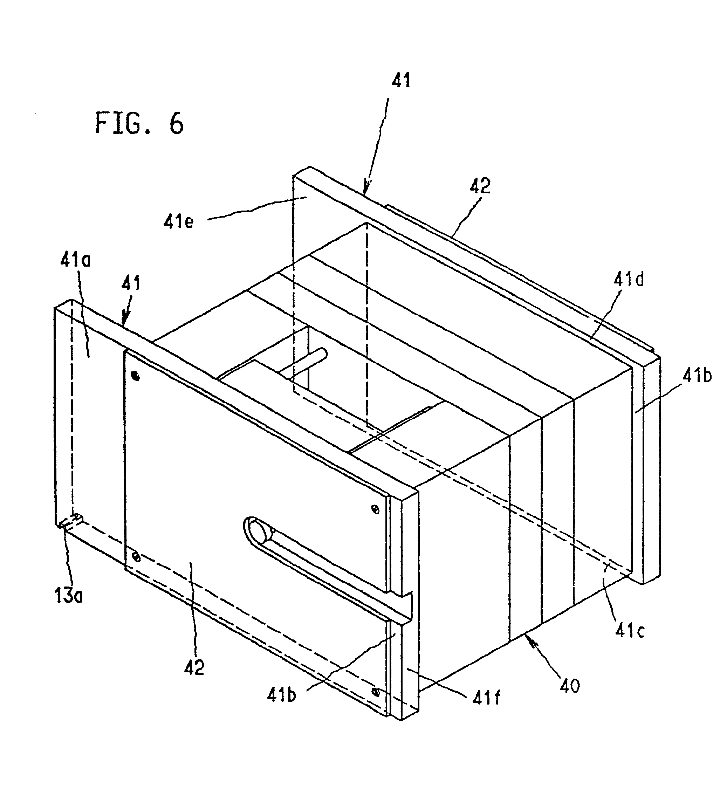

Die Spritzgießformen S können von unterschiedlicher Größe sein, umfassen jedoch in jedem Fall einen aus genormten Platten zusammengesetzten quaderförmigen Gießformkörper 40 und zwei diesen Gießformkörper 40 begrenzende Anlageplatten 41. Die Anlageplatten 41 sind mit Hilfe von Zentrierbolzen am Gießformkörper 40 befestigt. Sie sind insoweit integrierende Bestandteile der Spritzgießform. Die je mit einer Isolierplatte 42 armierten Anlageplatten 41 überragen den Gießformkörper 40 auf allen Seiten (Fig. 6). Der den Gießformkörper 40 nach unten überragende Führungsbereich 41c dient der Führung der Spritzgießform. Eine der beiden Anlageplatten 41 ist in ihrem Führungsbereich 41c mit einer als Kupplungorgan dienenden Quernut 13a von rechteckigem Querschnitt versehen. Da die Anlageplatten 41 den Gießformkörper 40 in einem Bereich 41a weit nach hinten überragen und die genannte Quernut 13a einer im Formspannraum F befindlichen Spritzgießform S derart im Bereich des Mitnehmers 20a der benachbarten Transportkette 20 des Wechseltisches 27, daß diese Transportkette 20 mit der Spritzgießform S kuppelbar ist. Die Kupplung geschieht dadurch, daß ein Mitnehmer 20a beim Lauf der Transportkette 20 im Gefolge seiner Bewegung auf dem Radius des zugehörigen Umlenkrades 26 seitlich in die Quernut 13a hineingelangt. Die Führungsbereiche 41c dienen wie die den Gießformkörper 40 nach oben überragenden Spannbereiche 41d dem Festspannen der Gießformhälften auf den Formträgern 12, 28 mittels Spannbolzen 15. Die Mitnehmer 20a der Transportkette 20 sind durch Gelenkbolzen dieser Kette gebildet und überragen die Oberfläche der Trägerplatte 24h nach oben. An dem vom Formspannraum F bzw. vom Depotstellplatz 44a abgewandten Ende jeder Transportkette 20 ist in einem Aufnahmeteil 190c′ der Verschiebeleiste 19c ein Antriebsmotor 21 angeordnet (Fig. 2, 4). Der zeitgerechte Antrieb der Transportketten 20 ist durch Steuerelemente steuerbar, die an diesen befestigt sind und über Steuerlapen mit Start – Stop-Schaltern des Wechseltisches 27 zusammenwirken.

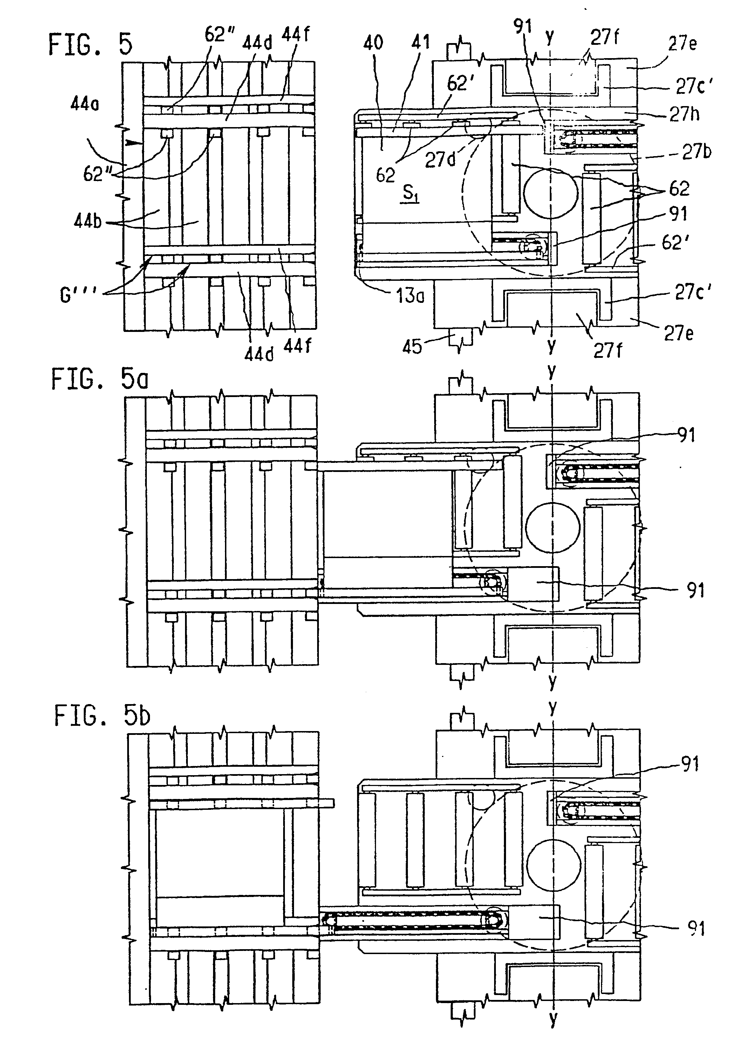

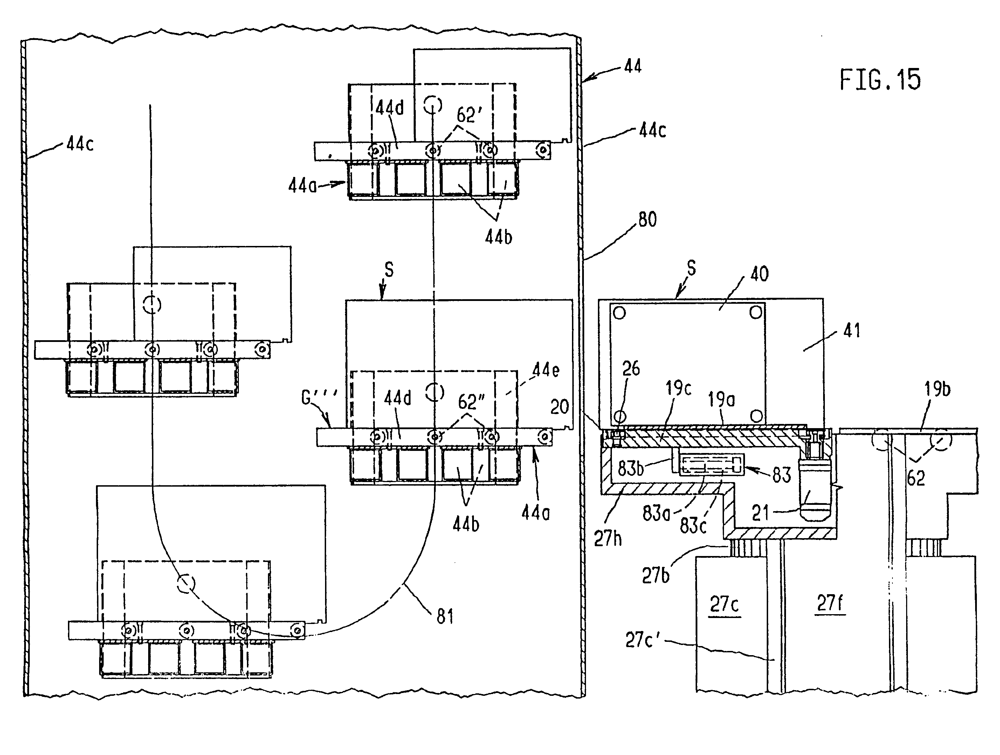

Das Depot 44 enthält sowohl Depotstellplätze 44a (Fig. 17) für Spritzgießformen S als auch Depotstellplätze 44a′ (Fig. 16), für Plastifiziereinheiten 52, die von Paletten 53 getragen sind. Die Depotstellplätze 44a′ entsprechen hinsichtlich ihrer Breite der Länge der Plastifiziereinheiten. Sie sind jedoch prinzipiell auch geeignet Spritzgießformen S aufzunehmen, weil die Gießformführungen G‴ aller Depotstellplätze 44a und 44a′ einander baulich entsprechen. Das Depot 44 ist als Schrank mit Wandungen 44c ausgebildet und weist eine Eingabe- bzw. Entnahmeöffnung 80 in Fig. 15 auf, deren Höhe etwa der mittleren Höhe der Gießformführungen G in den Formspannräumen F entspricht. Die nach dem Paternoster-Prinzip geführten Depotstellplätze 44a, 44a′ sind auf die Eingabe- bzw. Entnahmehöhe steuerbar. Wie in den Fig. 5, 5a, 5b und insbesondere 15 zeichnerisch dargestellt, sind die Spritzgießformen S und entsprechend auch die Paletten 53 für die Plastifiziereinheiten 52 auf Stützrollen 62″ abgestützt, die in seitlichen, in Transportrichtung angeordneten Lagerleisten 44d drehbar aufgenommen sind. Diese Lagerleisten 44d sin Bestandteile von Skelettkonstruktionen, die entlang der Bewegungslinie 81 als Gondeln geführt sind. Jede Gondel umfaßt horizontale Trägerbalken 44b, welche sich über die Breite des Schrankes erstrecken und vertikale Skelettelemente 44e. Wie aus der Fig. 5b in Verbindung mit Fig. 15 erkennbar, werden die Spritzgießformen S bzw. die Plastifiziereinheiten 52 tragenden Paletten 53 beim Einfahren bzw. Ausfahren aus dem Depot 44 je an einer einzigen Führungsleiste 44f geführt, welche zusammen mit einer zugehörigen Lagerleiste 44d die Gießformführung G‴ des betreffenden Depotstellplatzes 44a, 44a′ bildet.

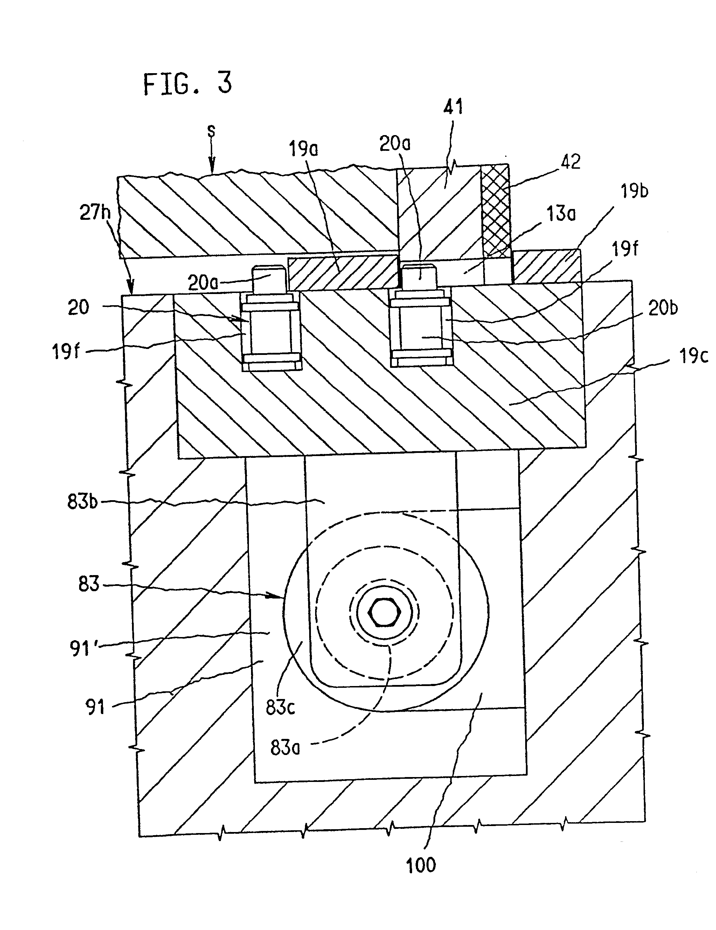

Wie insbesondere aus Fig. 3 in Verbindung mit den Fig. 4, 5, 5a, 5b ersichtlich, sind die beiden Transportketten 20 mit ihren Umlenkrädern 26 in einer Verschiebeleiste 19c gelagert, die ihrerseits in einem Führungslager 91 der Trägerplatte 27h des Wechseltisches 27 verschiebbar ist. Die vertikalen Mitnehmer 20a der Transportkette 20 überragen die Oberfläche der Trägerplatte 27h nach oben. Zwischen den beiden Trummen der Transportkette 20 ist die Transportleiste 19a von rechteckigem Querschnitt auf der Oberfläche der Verschiebeleisten 19c befestigt. Das gleiche gilt für die weitere Führungsleiste 19b, die von der Führungsleiste 19a im Abstand der Breite der Anlageplatte 41 plus Armierungsplatte 42 angeordnet ist, wie aus Fig. 3 erkennbar. Die Anlageplatte 41 ist mit der Armierungsplatte 42 zwischen den einander zugewandten vertikalen Längskanten der beiden Führungsleisten 19a und 19b geführt. Der Mitnehmer 20a des unterhalb der Anlageplatte 41 geführten Trumms der Transportkette 20 taucht zur Verwirklichung einer Kupplung in das Kupplungsorgan der Spritzgießform S, nämlich in die Quernut 13a der Anlageplatte 41 der Kupplung ein. Somit bilden die Verschiebeleiste 19c, die Transportkette 20 mit ihren Umlenkrädern 26 und dem zugehörigen Antriebsmotor 21 eine im Führungslager 91 in Richtung der jeweils benachbarten Spritzgießform verschiebbare bauliche Einheit, mit welcher eine auf dem Wechseltisch 27 ruhende Spritzgießform S über den Mitnehmer 20a der Transportkette 20 gekoppelt ist. Unterhalb der Verschiebeleiste 19c ist in einem Holraum 91' der Trägerplatte 27h ein Hydraulikzylinder 83 angeordnet, der zur Verschiebung der vorgenannten baulichen Einheit dient. Der eigentliche Hydraulikzylinder 83c ist mittels eines Befestigungsstückes 100 starr mit der Trägerplatte 27h verbunden. Die Kolbenstange 83a des Hydraulikzylinders 83 greift über ein Verbindungsstück 83b an der Unterseite der Verschiebeleiste 19c zur Mitnahme an.

Die Gießformwechseleinrichtung eignet sich zusätzlich auch für einen Wechsel der Plastifiziereinheit 52, deren beim Wechsel erforderlichen Transportbewegungen mit Hilfe einer Palette 53 ausgeführt werden können. Die Verbindung der Plastifiziereinheit 52 mit der Palette 53 zu einer Transporteinheit erfolgt in einer Position der Plastifiziereinheit, welche ihrer 'Absetzposition' in der Spritzgießmaschine entspricht, welche aus Fig. 10 ersichtlich ist.

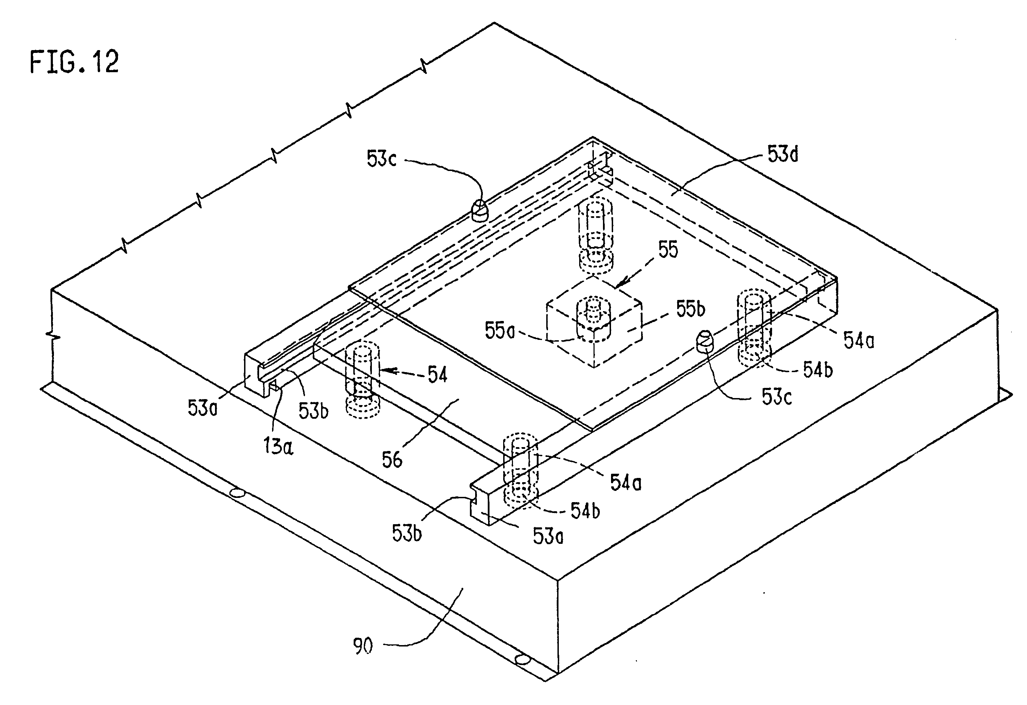

Die dort hergestellte Transporteinheit bleibt bei allen weiteren Transportbewegungen von der Spritzgießform zum Depot und auch im Depot bestehen. Die genannte Transporteinheit ist dadurch zur Führung in den Gießformführungen G'' des Wechseltisches 27 und den Gießformführungen G''' der Depotstellplätze 44a, 44a' geeignet, daß die Palette 53 ein Leitelement (Anlageplatten-Fragment 53a) zwecks Führung in den genannten Gießformführungen aufweist, das dem Leitelement (Anlageplatte 41) der Spritzgießform entspricht. Die genannte Transporteinheit kann dadurch in den Gießformführungen G'', G''' verschoben werden, daß ihre Palette ein Kupplungsorgan (Quernut 13a) aufweist, welches der Quernut einer Spritzgießform entspricht. Der Aufbau der Palette 53 und einer zugehörigen Palettenführung G$^{IV}$ zum Überführen der Transporteinheit von der Spritzgießmaschine auf den Wechseltisch 27 ergibt sich insbesondere aus Fig. 12 in Verbindung mit den Figuren 10, 14 : Die Gießformführung G$^{IV}$ ist durch eine, auf einem Podest 90 des Maschinenfußes 11 angeordnete, begrenzt vertikal verschiebbare, horizontale Führungsplatte 56 gebildet. Die Einrichtung zur Vertikalverschiebung dieser Führungsplatte 56 umfaßt vertikale Stifte 54b, die auf dem Podest 90 befestigt sind. Auf den Stiften 54b sind konzentrische Büchsen 54a der Führungsplatte 56 verschieblich gelagert. Zur begrenzten vertikalen Verschiebung der als Gießformführung G$^{IV}$ dienenden Führungsplatte 56 ist ein unterhalb der Führungsplatte 56 auf dem Podest 90 abgestützter, zentraler Hydraulikzylinder 55 vorgesehen. Der Hydraulikzylinder 55 umfaßt einen blockartigen stationären Zylinder 55b, dessen Kolben 55a über eine Kolbenstange an der Führungsplatte 56 angreift. Die Palette 53 als solche ist durch die beiden parallelen, je den Anlagebereich einer Anlageplatte 41 simulierenden Anlageplattenfragmente 53a und einer Lagerplatte 53d gebildet, durch welche die beiden Anlageplattenfragmente 53a miteinander verbunden sind. Wenigstens eines der beiden Anlageplattenfragmente 53a ist mit der als Kupplungsorgan dienenden Quernut 13a versehen und dient somit als Leitelement. Beide Anlageplattenfragmente 53a sind auf ihren einander zugewandten vertikalen Längskanten mit Führungsnuten 53b versehen, in welchen die Längsränder der zugehörigen Führungsplatte 56 eintauchen. Diese als Palettenführung G$^{IV}$ dienenden Langsränder bilden somit zusammen mit der benachbarten Gießformführung G'' des Wechseltisches 27 eine horizontale Transportbahn (Fig. 16), auf welcher die Plastifiziereinheit 52 mit Hilfe der Palette 53 aus ihrer Absetzposition auf den benachbarten Stellplatz des Wechseltisches 27 transportiert werden kann und umgekehrt.

Aus obigem ergibt sich, daß die Plastifiziereinheiten 52 dank der sie tragenden Paletten 53 und der Gießformwechseleinrichtung genauso gehandhabt werden können wie die Spritzgießformen S. Dies gilt insbesondere auch für die lineare Verschiebbarkeit einer auf einem Stellplatz des Wechseltisches 27 ruhenden Plastifiziereinheit durch die lineare Verschiebung der Verschiebeleiste 19c mit Hilfe des Hydraulikzylinders 83 (Fig. 3, 4) aus einer rückwärtigen Ruheposition (z. B. Fig. 5), in welcher die Transportkette 20 innerhalb der Grundfläche der Trägerplatte 27h liegt, in eine Kupplungsbereitschaftsposition (z.B. Fig. 5b), in welcher die Transportkette 20 die Grundfläche der Trägerplatte 27h in Richtung zur benachbarten Spritzgießmaschine bzw. in Richtung zum Depot 44 überragt. Die Bedeutung einer solchen linearen Verschiebbarkeit der im wesentlichen durch die Transportkette 20 gebildeten und in der Verschiebeleiste 19c zu einer Einheit zusammengefaßten Gießformverschiebevorrichtung eines jeden Stellplatzes des Wechseltisches 27 liegt in folgendem :

Bei der Fahrt des Wechseltisches von einer Spritzgießmaschine zum Depot 44 und umgekehrt finden sich die beiden Gießformverschiebevorrichtungen in rückwärtiger Position, also in Ruhestellung. Dadurch kann der Wechseltisch 27 ungehindert an den Spritzgießmaschinen bzw. an dem das Depot bildenden Schrank entlangfahren. Soll nun eine Spritzgießform S oder eine durch die Plastifiziereinheit 52 und die Palette 53 gebildete Transporteinheit von einer Spritzgießmaschine auf dem benachbarten, leeren Stellplatz eines in Anschlußposition gefahrenen Wechseltisches 27 übernommen werden, so ist die betreffende Gießformverschiebvorrichtung zuerst aus ihrer Ruhestellung, bei welcher das vordere Umlenkrad der Transportkette die Trägerplatte 27h des Wechseltisches 27 nach vorne nicht überragt (Fig. 5), durch eine Bereitschaftsverschiebung in eine Kupplungsbereitschafts-Position (Fig. 5a, 5b, 4, 10) zu überführen, in welcher die Verschiebeleiste 19c (Fig. 3, 4) die Trägerplatte 27h des Wechseltisches 27 nach vorne überragt und demzufolge sich das vordere Ende der Transportkette 20 im Bereich des Umlenkrades 26 unmittelbar neben der Quernut 13a der Anlageplatte 41 bzw. des Anlageplattenfragmentes 53a der anzukuppelnden Spritzgießform S bzw. der anzukuppelnden Transporteinheit befindet, und zwar derart, daß der Mitnehmer 20a der Transportkette 20 bei beginnendem Lauf dieser Transportkette seitlich in die genannte Quernut 13a in eine Kupplungsposition (Fig. 3) eingesteuert werden kann. Soll eine auf dem vorderen Stellplatz des Wechseltisches 27 abgestellte Spritzgießform S bzw. eine dort abgestellte, aus Plastifiziereinheit 52 und Palette 53 bestehende Transporteinheit in die zugehörige Spritzgießmaschine bzw. in einen Depotstellplatz 44a ; 44a' überführt werden, so ist ebenfalls eine Bereitschaftsverschiebung im obigen Sinne erforderlich ; denn diese Bereitschaftsverschiebung ist die Voraussetzung dafür, daß die zu transportierende Spritzgießform S bzw. Transporteinheit eine lagegerechte Position auf dem Depotstellplatz 44a ; 44a' bzw. in der Spritzgießmaschine (Formspannraum F oder Absetzposition) erreicht, indem gewissermaßen der Startpunkt bei Verschiebung der Spritzgießform S bzw. der Transporteinheit durch die genannte Bereitschaftsverschiebung auf dem Wechseltisch 27 vorverlegt wird.

Der Vollständigkeit halber soll hier erwähnt werden, daß der Wechseltisch 27 in seiner Führung 45 auch ohne Behinderung durch die benachbarten Spritzgießmaschinen bzw. durch den das Depot 44 bildenden Schrank verfahrbar ist, wenn die Trägerplatte 27h mit Hilfe des Vertikalschlittens 27c auf ein ausreichendes Höhenniveau eingestellt ist.

Dabei wird die Kupplung zwischen Transportkette 20 und der aus der Spritzgießform bzw. aus dem Depot 44 zu übernehemenden Spritzgießform bzw. Transporteinheit durch ein entsprechendes Absenken der Trägerplatte 27h auf ein Niveau erreicht, in welchem die Gießformführungen (G, G'' ; G^{IV}, G oder G''', G'') Transportbahen T ; T'', T' bilden. Soll eine Spritzgießform S bzw. eine Transporteinheit vom Stellplatz des Wechseltisches 27 in die Spritzgießform bzw. ins Depot 44 geschoben werden, so wird die beim Fahren des Wechseltisches 27 auf einem höheren Niveau befindliche Trägerplatte 27h in gleicher Weise zur Bildung der genannten Transportbahn abgesenkt, bevor die betreffende Transportkette 20 zur Verschiebung in Lauf gesetzt wird.

Im übrigen ist es nicht unbedingt erforderlich, die Transporteinheit aus der Spritzgießmaschine auf den benachbarten Stellplatz des Wechseltisches 27 auf einer horizontalen Transportbahn G^{IV} zu überführen und umgekehrt. Möglich ist nämlich auch eine Umsetzung der Transporteinheit mit Hilfe einer bekannten Hebevorrichtung, so daß die in Betracht gezogene Transportbahn auch Abschnitte umfaßt, in welchen die Transporteinheit angehoben bzw. abgesenkt wird.

Wie aus den Schematas der Figuren 7, 10 ; 18, 21 ersichtlich, können sich im Bereich der Gießformwechselvorrichtung größere oder kleinere oder gleichgroße Spritzgießmaschinen befinden. Unterschiedlich große Spritzgießmaschinen sind zweckmäßigerweise in unterschiedlichen Abständen zur vertikalen Symmetrieebene des Wechseltisches 27 angeordnet. Die genannten Abstände sind solcherart, daß die Quernuten 13a der in den Formspannräumen F, den Depotstellplätzen 44a ; 44a' bzw. in den Palettenführungen G^{IV} befindlichen Spritzgießformen S bzw. Paletten 53 sich in gleichem Abstand von der Symmetrieebene y-y befinden, und zwar unabhängig davon, ob die Spritzgießmaschinen auf der einen oder auf der anderen Seite der Führung 45 angeordnet sind. Unter dieser Voraussetzung können die Transportwege von unterschiedlich großen Spritzgießformen bzw. unterschiedlich großen Transporteinheiten auf den Transportbahnen T ; T'' unterschiedlich lang sein.

Im Schema der Fig. 7 wird gerade eine auszuwechselnde Spritzgießform S1 vom Formspannraum F einer Spritzgießmaschine auf den leeren, benachbarten Stellplatz des in Anschlußposition gefahrenen Wechseltisches 27 überführt. Eine einzuwechselnde Spritzgießform S2 befindet sich auf dem rückwärtigen Stellplatz des Wechseltisches, die aus dem Depot 44 stammt. In Fig. 8 ist verdeutlicht, wie durch eine Drehung des Wechseltisches 27 um 180° die nunmehr auf den vorderen Stellplatz des Wechseltisches 27 gelangte Spritzgießform S1 in eine Position gelangen kann, wie sie zuvor (in Fig. 7) von der einzuwechselnden Spritzgießform S2 eingenommen worden ist, während diese einzuwechselnde Spritzgießform S2 in eine Position gelangt, in welcher zuvor die auszuwechselnde Spritzgießform S1 war. Fig. 9 zeigt ein Stadium des Gießformwechsels, in welchem die einzuwechselnde Spritzgießform S2 bereits vom benachbarten Stellplatz des Wechseltisches 27 in den Formspanraum F gelangt und dieser Wechseltisch 27 in Anschlußposition an einen leeren Depotstellplatz gefahren und seine Trägerplatte 27h um 180° gedreht ist. Auf einer nunmehr durch die Gießformführung G''' des genannten Depotstellplatzes 44a und die benachbarte Gießformführung G'' des Wechseltisches 27 gebildeten Transportbahn T' kann die ausgewechselte Spritzgießform S1 in den Depotstellplatz 44a eingefahren werden. Im Schema der Fig. 16 wird gerade eine Transporteinheit mit Pastifiziereinheit 52 von einer Spritzgießmaschine auf den benach-

barten leeren Stellplatz des Wechseltisches 27 auf einer Transportbahn T" überführt. Auf dem rückseitigen Stellplatz des Wechseltisches 27 befindet sich eine Transporteinheit 52', die vom Depot 44 stammt. Im Schema der Fig. 17 ist verdeutlicht, wie die einzuwechselnde Transporteinheit 52' durch Drehung der Trägerplatte 27h des Wechseltisches 27 in eine Position gelangt, die der Position entspricht, welche die auszuwechselnde Transporteinheit 52 zuvor (Fig. 16) eingenommen hat, wobei die ausgewechselte Transporteinheit 52 nunmehr auf den rückwärtigen Stellplatz des Wechseltisches gelangt ist. Das Schema gemäß Fig. 18 zeigt ein Stadium des Wechsels der Plastifiziereinheit, bei welchem die einzuwechselnde Transporteinheit 52' in die Spritzgießmaschine gelangt, der Wechseltisch 27 in Anschlußposition an einen Gießformstellplatz 44a gefahren und eine Trägerplatte 27h bereits wieder um 180° gedreht ist. Die im Depot aufzubewahrende Transporteinheit 52 wird gerade auf den Stellplatz 44a überführt.

Wie sich aus obigem ergibt, ist die Gießformführung G im Formspannraum F durch Stützelemente 18 beider Formträger 12, 28 und durch deren Aufspannflächen gebildet. Auf dem Wechseltisch 27 ist die Gießformführung G" durch die Führungsleisten 19a, 19b gebildet. In den Depotstellplätzen 44a, 44a' ist die Gießformführung G''' durch Stützrollen 62' und Führungsleisten 44f sowie Lagerleisten 44a verwirklicht. Die Palettenführung $G^{IV}$ in der Spritzgießmaschine ist ausschließlich durch die Längsränder der Führungsplatte 56 gebildet. Obwohl das ziehende bzw. schiebende Trumm der transportierenden Transportkette 20 nur an einer Anlageplatte 41 bzw. einem Anlageplattenfragment 53a einer Spritzgießform S bzw. einer Palette 53a, also asymmetrisch angreift, sind nennenswerte Verkantungen in den vorgenannten Gießformführungen nicht zu befürchten, weil die Anlageplatte 41 bzw. das Anlageplattenfragment 53a, welche bzw. welches kein Kupplungsorgan (Quernut 13a) aufweist, ohne nennenswerte Friktion über die Stützrollen 62 abrollbar ist.

In den Fign. 5, 5a und 5b sind zeitlich aufeinanderfolgende Stadien der Überführung einer Spritzgießform S vom Wechseltisch 27 auf einen Depotstellplatz 44a gezeigt. In Fig. 5 befindet sich die Spritzgießform in einer für die Fahrt des Wechseltisches auf der Führung 45 geeigneten Lage auf ihrem Stellplatz. In Fig. 5a ist die Verschiebeleiste 19c die in ihr zu einer Einheit zusammengefaßten Organe der Verschiebeeingrichtung aus der rückwärtigen Ruhestellung in die vordere Kupplungsbereitschafts-Stellung verschoben und zwar zusammen mit der an die Transportkette 20 angekuppelten Spritzgießform. Erst in dieser Position wird die Transportkette 20 in Lauf gesetzt, so daß die Spritzgießform, wie aus Fig. 5b ersichtlich, in eine lagegerechte Position auf den Gießformstellpatz 44a geschoben wird.

## Ansprüche

1. Verfahren zum Auswechseln einer Spritzgießform (R) in einer Spritzgießanlage mit mehreren Kunststoff-Spritzgießmaschinen, die parallel zu einer zu einem Depot (44) führenden linearen Führung (45) eines als Transportwagen dienenden Wechseltisches (27) ausgerichtet sind, bei welchem Verfahren die im Formspannraum (F) befindliche Spritzgießform (S) mit Hilfe eines an ihr angeordneten Leitelementes (Anlageplatte 41) auf einer horizontalen Transportbahn (T) auf den Gießformwechseltisch (27), danach mit diesem Gießformwechseltisch (27) in Anschlußposition vor einen Stellplatz (44a) des Depots (44) und sodann mit Hilfe des Leitelementes (Anlageplatte 41) auf einer horizontalen Transportbahn (T') auf den Depotstellplatz (44a) transportiert wird, und bei welchem Verfahren eine einzuwechselnde Spritzgießform (S) von einem Stellplatz (44a) des Depots (44) auf der Transportbahn (T') auf den Gießformwechseltisch (27), danach mit diesem Gießformwechseltisch (27) in Anschlußposition vor den Formspannraum (F) einer Kunststoff-Spritzgießmaschine und sodann auf der Transportbahn (T) vom Gießformwechseltisch (27) mittels des Leitelementes (Anlageplatte 41) in den Formspannraum (F) transportiert wird, wobei auf dem Gießformwechseltisch (27) bedarfsweise jeweils eine oder gleichzeitig zwei Spritzgießformen transportiert werden, dadurch gekennzeichnet, daß zum Auswechseln einer Plastifiziereinheit (52) einer Kunststoff-Spritzgießmaschine eine Palette (53) mit der in der Kunststoff-Spritzgießmaschine befindlichen Plastifiziereinheit (52 ; 52') zu einer Transporteinheit (52 ; 53) verbunden wird, welche Palette (53) ein dem Leitelement (Anlageplatte 41) der Spritzgießform (S) entsprechendes Leitelement (Anlageplattenfragment 53a) aufweist, und daß aus einer Gießformführung (G") des Gießformwechseltisches (27) und einer Palettenführung ($G^{IV}$) der Kunststoff-Spritzgießmaschine eine Transportbahn (T") gebildet und die Transporteinheit (52 ; 53) auf dieser Transportbahn (T") und im übrigen wie eine Spritzgießform (S) mit dem Gießformwechseltisch (27) von und zum Depot (44) transportiert wird und daß bei Beendigung des Auswechslungsvorganges die Palette (53) wieder von der Plastifiziereinheit (52) abgetrennt wird.

2. Verfahren nach Anspruch 1, dadurch gekennzeichnet, daß die Transporteinheit (52, 53) und die Transportbahn (T") durch gemeinsames vertikales Anheben bzw. Absenken der Palettenführung (Führungsplatte 56 in Fig. 10-14) und der Palette (53) hergestellt bzw. aufgelöst wird.

3. Gießformwechseleinrichtung an einer Spritzgießanlage mit einem Depot (44) und mit mehreren, parallel zu einer Führung (45) ausgerichteten Kunststoff-Spritzgießmaschinen (Spritzgießmaschinen), die je eine in einem Formspannraum (F) einer Formschließeinheit einspannbare Spritzgießform (S) und eine von dieser in eine Absetzposition absetzbare, horizontale Spritzgießeinheit mit nach Programm abkuppelbarer Plastifiziereinheit (52) aufweisen, mit einem als Transportwagen dienenden Gießformwechseltisch (27) mit zwei Gießformstellplätzen, die auf einer um wenigstens 180° drehbaren Drehplatte (27h) hintereinander angeordnet und je mit einer Gießformführung (G") und je einer an Kupplungsorganen der Spritzgießform angreifenden Gießformverschiebevorrichtung (20, 21, 26) versehen sind, wobei der Gießformwechseltisch (27) derart an der Rückseite (r) der Spritzgießmaschine parallel zu der zum Depot (44) führenden linearen Führung (45) in Anschlußpositionen verfahrbar ist, daß die Gießformführungen (G") der Gießformstellplätze wechselweise mit einer Gießformführung (G) eines Formspannraumes (F) und wechselweise mit der Gießformführung (G") eines Depotstellplatzes (44a) quer zu den Spritzachsen (x-x) verlaufende Transportbahnen (T, T') bilden, auf welchen die Spritzgießform (S) mittels eines an ihr angeordneten Leitelementes (Anlaeplatte 41) vom Formspannraum (F) oder vom Depotstellplatz (44a) auf den Gießformwechseltisch (27) und umgekehrt verschiebbar ist, dadurch gekennzeichnet, daß wenigstens eine mit einer Plastifiziereinheit (52) zu einer Transporteinheit (53, 52) verbindbare Palette (53) vorgesehen ist und daß wenigstens an einer der Spritzgießmaschinen eine quer zur Spritzachse (x-x) verlaufende Palettenführung (G^IV) angeordnet und der Gießformwechseltisch (27) in eine Anschlußposition verfahrbar ist, in welcher seine Gießformführungen (G") wechselweise mit der Palettenführung (G^IV) und der Gießformführung (G") eines Depotstellplatzes (44a) Transporbahnen (T" ; T') für eine die Plastifiziereinheit (52) tragende Palette (53) bilden.

4. Gießformwechseleinrichtung nach Patentanspruch 3, dadurch gekennzeichnet, daß die Spritzgießmaschinen beidseits einer Symmetrieebene (y-y) der Führung (45) angeordnet sind und wechseltischseitige Kupplungsorgane (Quernuten 13a) der in den Formspannräumen (F) bzw. Depotstellplätzen (44a) bzw. Palettenführungen (G^IV) befindlichen Spritzgießformen (S bzw. Paletten 53) sich in gleichem Abstand von der durch die Führung (45) des Wechseltisches (27) gehenden vertikalen Symmetrieebene (y-y) befinden.

5. Gießformwechseleinrichtung nach einem der Patentansprüche 3 oder 4, dadurch gekennzeichnet, daß die durch Stützrollen (62' in Fig. 5, 17) gebildeten Depotstellplätze (44a) nach dem Paternoster-Prinzip geführt und in einer vertikalen Führungsbahn auf eine Eingabe-bzw. Entnahmehöhe steuerbar sind, die etwa der mittleren Höhe der Gießformführungen (G) in den Formspannräumen (F) entspricht.

6. Gießformwechseleinrichtung nach einem der Patentansprüche 3 bis 5, dadurch gekennzeichnet, daß die Paletten (53) je zwei den Anlageplatten (41) an der Spritzgießform (S) entsprechende Anlageplattenfragmente (53a) aufweisen, die durch eine Lagerplatte (53b ; 53d in Fig. 12) miteinander verbunden und mit wenigstens einer Quernut (13a) versehen sind.

7. Gießformwechseleinrichtung nach einem der Patentansprüche 3 bis 6, dadurch gekennzeichnet, daß in einer Fußplatte (27e) des Wechseltisches (27) symmetrisch zur Symmetrieebene (y-y in Fig. 2, 5, 10) der Führung (45) zwei vertikale Säulen (27f) verankert sind und daß ein als Gehäuse ausgebildeter blockartiger Schlitten (27c) mittels U-Schienen (27c) an diesen Säulen (27f) vertikal führbar ist, auf welchem Schlitten (27c) eine die beiden Gießformführungen (G") und die beiden Transportketten (20) des Wechseltisches (27) aufnehmende Trägerplatte (27h) mittels Drehscheibe (27b) um 180° drehbar gelagert ist.

8. Gießformwechseleinrichtung nach Patentanspruch 7, dadurch gekennzeichnet, daß der den Wechsel der Spritzgießformen (S) und Plastifiziereinheiten (52) steuernde Computer im Schlitten (27c) angeordnet ist und daß die vertikale, rotierbare Antriebswelle (27d) eines ebenfalls im Schlitten (27c) angeordneten Motors über ein Ritzel (27d) mit einem Zahnkranz am Umfang der Drehscheibe (27b) kämmbar ist.

9. Gießformwechseleinrichtung nach einem der Patentansprüche 3-8, dadurch gekennzeichnet, daß die Palettenführung (G^IV) durch eine Führungsplatte (56) gebildet ist, deren Längsränder in Führungsnuten (53b) der Anlageplattenfragmente (53a) der Palette (53) eintauchen, und daß die Führungsplatte (56) samt der Palette (53) mittels eines vertikal arbeitenden Hydraulikzylinders (55) unter das Niveau der Gießformführung (G") des Wechseltisches (27) absenkbar ist (Fig. 10, 12, 14).

**Claims**

1. Method for changing an injection mould (R) in an injection-moulding apparatus with several synthetic injection-moulding machines, which are oriented parallel to a linear guide (45) leading to a store (44) of a changing table (27), which serves as a transport carriage, in which method the injection mould (S), which is located in the mould-clamping space (F), is transported with the aid of a thereto associated guide element (abutment plate 41) on a horizontal transport track (T) to the injection-mould changing table (27), then with this injection-mould changing table (27) in connect position in front of a storage location (44a) of the store (44), and then with the aid of the guide element (abutment plate 41) on a horizontal transport track (T') to the storage location (44a), and in which method the injection mould to be exchanged (S) is transported from a storage location (44a) of the store (44) on the transport track (T') to the injection-mould changing table (27), then with this injection-mould changing table (27) in connect position in front of the mould-clamping space (F) of a synthetic injection-moulding machine, and then on the transport track (T) from the injection-mould changing table (27) by means of a guide element (abutment plate 41) into the mould-clamping space (F), in which respect one or two injection moulds are simultaneously transported on the injection-mould changing table (27), as required, **characterised in that** a pallet (53) is connected to a plasticising unit (52 ; 52'), which is contained in the synthetic-material injection-moulding machine, to form a transport unit (52 ; 53) for the purpose of changing a plasticising unit (52) of a synthetic-material injection-moulding machine, which pallet (53)˙ has a guide element (abutment-plate fragment 53a) corresponding to the guide element (abutment plate 41), and in that a transport track (T") is formed by an injection-mould guide (G") of the injection-mould changing table (27) and a pallet guide (G$^{IV}$) of the synthetic-material injection-moulding machine, and in that the transport unit (52 ; 53) is transported on this transport track (T"), and otherwise like an injection mould (S) with the injection-mould changing table (27) from and to the store (44), and in that the pallet is again separated from the plasticising unit (52) after completion of the changing process.

2. Method according to claim 1, **characterised in that** both the transport unit (52, 53) and the transport track (T") are established or disposed by simultaneous lifting or lowering of both the pallet guide (guide plate 56 in Fig. 10 – 14) and the pallet (53).

3. Injection-mould changing device at an injection-moulding machine including a store (44) and with several synthetic-material injection-moulding machines (injection-moulding machines), which are oriented parallel to a guide (45) and which have each one injection-mould (S), which is clamped into a mould-clamping space (F) of a mould-closing unit, and a horizontal injection-moulding unit, which is removable therefrom into a setting-down position, with plasticising unit (52), which is detachable according to a program, with an injection-mould changing table (27) serving as transport carriage with two injection-mould storage locations, which are arranged one behind the other on an at least 180° rotatable turntable (27h), and with each one injection-mould guide (G") and each one injection-mould displacement device (20, 21, 26) engaging the coupling members of the injection mould, in which respect the injection-mould changing table (27) is transportable at the rear side (r) of the injection-mould machine parallel to the linear guide (45), which leads to the store (44) into connect position, that the injection-mould guides (G") of the injection-mould-storage locations form transport tracks (T, T'), which extend transversely to the injection axes (x-x) alternately with an injection-mould guide (G) of a mould-clamping space (F) and alternately with the injection-mould guide (G") of a storage location (44a), on which transport tracks the injection-mould (S) is displaceable by means of thereat arranged guide element (abutment plate 41) from the mould-clamping space (F) or from the depot storage location (44a) to the injection-mould changing table (27) or vice versa, **characterised in that** at least one pallet, which is connectable with a plasticising unit (52) to a transport unit (53, 52), is provided, and in that a pallet guide (G$^{IV}$), which extends transversely to the injection axis (x-x), is arranged at at least one of the injection-moulding machines, and in that the injection-mould changing table (27) is movable into a connect position, in which its injection-mould guides (G") form transport tracks (T" ; T') for a pallet (53), which carries the plasticising unit (52), alternately with the pallet guide (G$^{IV}$) and the injection-mould guide (G") of a storage location (44a).

4. Injection-mould changing device according to patent claim 3, **characterised in that** the injection-moulding machines are arranged on both sides of the plane of symmetry (y-y) of the guide (45), and in that coupling members (transverse grooves 13a) at the side of the changing table of the injection-moulds (S or pallets 53 respectively), which are disposed in the mould-clamping spaces (F) or the storage locations (44a) respectively or the pallet guides (G$^{IV}$) respectively, are the same distance from the vertical plane of symmetry (y-y) which passes through the guide (45) of the changing table (27).

5. Injection-mould changing device according to one of patent claims 3 or 4, **characterised in that** the storage locations (44a), which are formed by support rollers (62' in Fig. 5, 17), are guided in the continuous-link principle and are controllable in a vertical guide track relative to a loading- or unloading height which corresponds approximately to the middle height of the injection-mould guides (G) in the mould-clamping spaces (F).

6. Injection-mould changing device according to one of patent claims 3 to 5, **characterised in that** the pallets (53) have each two abutment-plate fragments (53a) corresponding to the abutment plates (41) and the injection mould (S), which fragments are interconnected by a mounting plate (53b ; 53d in Fig. 12) and provided with at least one transverse groove (13a).

7. Injection-mould changing device according to one of patent claims 3 to 6, **characterised in that** two vertical columns (27f) are symmetrically anchored relative to the plane of symmetry (y-y in Fig. 2, 5, 10) of the guide (45) in a foot plate (27e) of the changing table (27), and in that a block-like carriage (27c), which is constructed as a casing, is vertically guided on these columns (27f) by means of U-rails (27c), and on which carriage (27c) is mounted a support plate (27h), which is rotatable around 180° by way of a turntable (27b), and which receives the two injection-mould guides (G″) and the two transport chains (20) of the changing table (27).

8. Injection-mould changing device according to patent claim 7, **characterised in that** computer, which controls the changing of the injection moulds (S) and the plasticising units (52), is arranged in the carriage (27c), and in that the vertical, rotatable drive shaft (27d) of a motor, which is also accommodated in the carriage (27c), meshes via a pinion (27d) with a ring gear at the periphery of the rotary disc (27b).

9. Injection-mould changing device according to one of patent claims 3 - 8, **characterised in that** the pallet guide (G$^{IV}$) is formed by a guide plate (56), the longitudinal edges of which engage in guide grooves (53b) of the abutment-plate fragments (53a) of the pallet (53), and in that the guide plate (56) including the pallet (53) is lowered below the level of the injection-mould guide (G″) of the changing table (27) by means of a vertically operating hydraulics cylinder (55).

## Revendications

1. Procédé pour changer un moule de moulage par injection (S) dans une installation de moulage par injection comprenant plusieurs machines de moulage par injection de matière plastique qui sont dirigées parallèlement à un guidage linéaire (45) conduisant à un dépôt (44) d'une table de changement (27) servant de véhicule de transport, procédé dans lequel le moule de moulage par injection (S) qui se trouve dans l'espace de serrage des moules (F) est transporté sur une voie de transport horizontale (T), à l'aide d'un élément de guidage disposé sur lui (plaque d'appui 41), jusque sur la table de changement de moule (27), puis, avec cette table de changement de moule (27), en position de raccordement devant un emplacement (44a) du dépôt (44), et ensuite sur une voie de transport horizontale (T'), à l'aide de l'élément de guidage (plaque d'appui 41), jusque sur l'emplacement (44a) du dépôt, et procédé dans lequel un moule de moulage par injection (S) qui doit prendre la place est transporté sur la voie de transport (T') depuis un emplacement (44a) du dépôt (44) jusque sur la table de changement de moule (27), puis, avec cette table de changement de moule (27), en position de raccordement devant l'espace de serrage des moules (F) d'une machine de moulage par injection de matière plastique, et ensuite sur la voie de transport (T), au moyen de l'élément de guidage (plaque d'appui 41), depuis la table de changement de moule (27) jusque dans l'espace de serrage des moules (F), un moule de moulage par injection ou deux en même temps étant transportés à chaque fois en cas de besoin sur la table de changement de moule (27), caractérisé par le fait que, pour échanger une unité de ramollissement (52) d'une machine de moulage par injection de matière plastique, une palette (53) est reliée à l'unité de ramollissement (52 ; 52') qui se trouve dans la machine de moulage par injection de matière plastique pour former une unité de transport (52 ; 53), ladite palette (53) comportant un élément de guidage (portion de plaque d'appui 53a) qui correspond à l'élément de guidage (plaque d'appui 41) du moule de moulage par injection (S), et par le fait qu'une voie de transport (T″) est formée à partir d'un guidage de moules (G″) de la table de changement de moule (27) et d'un guidage de palettes (G$^{IV}$) de la machine de moulage par injection de matière plastique, et que l'unité de transport (52 ; 53) est transportée sur cette voie de transports (T″), par ailleurs comme l'est un moule de moulage par injection (S), avec la table de changement de moule (27) depuis et vers le dépôt (44), et par le fait que la palette (53) est à nouveau séparée de l'unité de ramollissement (52) à la fin de l'opération d'échange.

2. Procédé selon la revendication 1, caractérsé par le fait que l'unité de transport (52 ; 53) et la voie de transport (T″) sont réalisées ou défaites, respectivement, par soulèvement ou par abaissement vertical commun, respectivement, du guidage de palettes (plaque de guidage 56 sur les figures 10 à 14) et de la palette (53).

3. Dispositif de changement de moule sur une installation de moulage par injection comprenant un dépôt (44) et plusieurs machines de moulage par injection de matière plastique (machines de moulage par injection) qui sont dirigées parallèlement à un guidage (45) et qui comportent chacune un moule de moulage par injection (S) pouvant être serré dans un espace de serrage des moules (F) d'une unité de fermeture des moules et une unité horizontale de moulage par injection, laquelle peut être déposée dans une position de dépose et comprend une unité de ramollissement (52) pouvant être désaccouplée selon un programme, comprenant une table de changement de moule (27) servant de véhicule de transport et comportant deux emplacements de moules qui sont diposés l'un derrière l'autre sur une plaque tournante (27h) pouvant tourner d'au moins 180° et qui sont munis chacun d'un guidage de moules (G″) et chacun d'un dispositif de déplacement des moules (20, 21, 26) en prise avec des organes d'accouplement du moule de moulage par injection, la table de changement de moule (27) pouvant être amenée dans des positions de raccordement sur le côté arrière (r) de la machine de moulage par injection parallèlement au guidage linéaire (45) qui conduit au dépôt (44), et ce, de telle manière que les guidages de moules (G″) des emplacements de moules constituent, alternativement avec un guidage de moules (G) d'un espace de serrage des moules (F) et alternativement avec le guidage de moules (G″) d'un emplacement de dépôt (44a), des voies de transport (T, T') qui s'étendent transversalement par rapport aux axes d'injection (x-x) et sur lesquelles le moule de moulage par injection (S), au moyen d'un élément de guidage (plaque d'appui 41) disposé sur lui, peut être déplacé depuis l'espace de serrage des moules (F) ou depuis l'emplacement de dépôt (44a) jusque sur la table de changement de moule (27), et inversement, caractérisé par le fait qu'il est prévu au moins une palette (53) qui peut être reliée à une unité de ramollissement (52) pour former une unité de transport (53, 52), et par le fait qu'un guidage de palettes (G$^{IV}$) qui s'étend transversalement par rapport à l'axe d'injection (x-x) est disposé sur l'une au moins des machines de moulage par injection, et que la table de changement de moule (27) peut être amenée dans une position de raccordement dans laquelle ses guidages de moules (G″) constituent, alternativement avec le guidage de palettes (G$^{IV}$) et avec le guidage de moules (G‴) d'un emplacement de dépôt (44a), des voies de transport (T″ ; T′) pour une palette (53) qui porte l'unité de ramollissement (52).

4. Dispositif de changement de moule selon la revendication 3, caractérisé par le fait que les machines de moulage par injection sont disposées des deux côtés d'un plan de symétrie (y-y) du guidage (45), et que des organes d'accouplement situés du côté de la table de changement (rainures transversales 13a) des moules de moulage par injection (S, respectivement des palettes 53) qui se trouvent dans les espaces de serrage des moules (F) ou aux emplacements de dépôt (44a), respectivement, ou dans les guidages de palettes (G$^{IV}$), respectivement, se trouvent à la même distance du plan de symétrie vertical (y-y) qui passe par le guidage (45) de la table de changement de moule (27).

5. Dispositif de changement de moule selon l'une des revendications 3 ou 4, caractérisé par le fait que les emplacements de dépôt (44a) constitués par des rouleaux d'appui (52′ sur les figures 5 et 17) sont guidés selon le principe de la noria, et qu'ils peuvent être amenés dans une voie de guidage verticale à un niveau de chargement ou de déchargement, respectivement, qui correspond à peu près au niveau moyen des guidages de moules (G) dans les espaces de serrage des moules (F).

6. Dispositif de changement de moule selon l'une des revendications 3 à 5, caractérisé par le fait que les palettes (53) comportent chacune deux portions de plaque d'appui (53a) qui correspondent aux plaques d'appui (41) sur le moule de moulage par injection (S), qui sont reliées entre elles par une plaque porte-paliers (53b ; 53d sur la figure 12) et qui sont munies d'au moins une rainure transversale (13a).

7. Dispositif de changement de moule selon l'une des revendications 3 à 6, caractérisé par le fait que deux colonnes verticales (27f) sont ancrées dans une semelle (27e) de la table de changement de moule (27), symétriquement par rapport au plan de symétrie (y-y sur les figures 2, 5 et 10) du guidage (45), et par le fait qu'un chariot (27c) analogue à un bloc et réalisé sous la forme d'un carter peut être guidé verticalement sur ces colonnes (27f) au moyen de rails en U (27c′), chariot (27c) sur lequel une plaque porteuse (27h) recevant les deux guidages de moules (G″) et les deux chaînes transporteuses (20) de la table de changement de moule (27) est montée en pouvant tourner de 180° au moyen d'un disque tournant (27b).

8. Dispositif de changement de moule selon la revendication 7, caractérisé par le fait que l'ordinateur qui commande le changement des moules de moulage par injection (S) et des unités de ramollissement (52) est disposé dans le chariot (27c), et par le fait que l'arbre d'entraînement vertical tournant (27d) d'un moteur disposé également dans le chariot (27c) engrène par l'intermédiaire d'un pignon (27d) avec une couronne dentée à la périphérie du disque tournant (27b).

9. Dispositif de changement de moule selon l'une des revendications 3 à 8, caractérisé par le fait que le guidage de palettes (G$^{IV}$) est constitué par une plaque de guidage (56) dont les bords longitudinaux pénètrent dans des rainures de guidage (53b) des portions de plaque d'appui (53a) de la palette (53), et par le fait que la plaque de guidage (56) peut être abaissée avec la palette (53) au-dessous du niveau du guidage de moules (G″) de la table de changement de moule (27) au moyen d'un vérin hydraulique (55) travaillant verticalement (figures 10, 12, 14).

FIG. 1

# FIG. 2

## FIG. 3

FIG. 4

FIG. 5

FIG. 5a

FIG. 5b

FIG. 6

EP 0 255 852 B1

FIG. 7

FIG. 8

FIG. 9

FIG.10

FIG.11

FIG.12

EP 0 255 852 B1

## FIG.13

FIG.14

51
17
17'
10
52
52c
52a
S₁
53
96b
92'
96a
92'
93
G^IV
93
96
53a
56
55
54
92
90
96
17
11
92

EP 0 255 852 B1

24

FIG.15

FIG.16

FIG.17

FIG.18